(19) **Europäisches Patentamt**
**European Patent Office**
**Office européen des brevets**

(11) **EP 4 465 265 A1**

(12) # EUROPEAN PATENT APPLICATION

(43) Date of publication:
**20.11.2024 Bulletin 2024/47**

(21) Application number: **23174053.1**

(22) Date of filing: **17.05.2023**

(51) International Patent Classification (IPC):
**G07C 9/00** $^{(2020.01)}$    **B60R 25/24** $^{(2013.01)}$
**G01S 5/14** $^{(2006.01)}$    **H04W 4/029** $^{(2018.01)}$

(52) Cooperative Patent Classification (CPC):
**G07C 9/00309; B60R 25/245; G01S 5/14;**
G07C 2009/00555; G07C 2209/63

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Aptiv Technologies AG
8200 Schaffhausen (CH)**

(72) Inventors:
• **KORTA, Jakub
  31-241 Kraków (PL)**
• **WYSZYNSKI, Grzegorz
  32-020 Wieliczka (PL)**

(74) Representative: **Bardehle Pagenberg
Partnerschaft mbB
Patentanwälte Rechtsanwälte
Prinzregentenplatz 7
81675 München (DE)**

(54) **METHOD AND SYSTEM FOR DETERMINING THE POSITION OF A VEHICLE UNLOCKING DEVICE**

(57)     A computer-implemented method for determining the position of a vehicle unlocking device relative to a position of a vehicle, the method comprising the steps of receiving, from a plurality of sensors arranged at the vehicle, a distance indication from each sensor of the plurality of sensors, each distance indication indicating a measured distance between the respective sensor and the vehicle unlocking device; generating, based on each measured distance, a region having an inner and an outer boundary, each region being associated with one of the plurality of sensors; determining an overlap region according to an overlap of each of the regions; and determining the position of the vehicle unlocking device according to the overlap region.

**Fig.9**

Processed by Luminess, 75001 PARIS (FR)

## Description

### Field of the invention

The present disclosure relates to a computer-implemented method, a computer program, and a system for determining the position of a tracked object.

### Background

Vehicles (cars, ships, robots etc.) nowadays are provided with more than one mode for opening and accessing the vehicle, such as a mechanical key, a remote key, and recently, also provided with keyless access.

Such a keyless access authentication method is accompanied by positioning a vehicle unlocking device which acts as an access key to ensure that it is with the person wanting to access the vehicle, not several hundreds of meters away.

In some vehicles, keyless access systems have been based on a localization approach, which uses a measurement of field strength and checks the measured values against previously gathered data. However, such an approach may only provide a rough estimation which is normally used within short distances and can also be susceptible to relay station attacks.

Therefore, there is a need for an improved vehicle unlocking device position determination method and system.

### Summary of the Invention

To achieve the above objective, the present invention provides a method for determining the position of a tracked object. In the present disclosure, the method is applied to determine the position of a vehicle unlocking device, relative to a position of a vehicle. However, the method can be applied to determine the position of any tracked object in relation to another object, using wireless technology for example.

In a first aspect of the invention, a computer-implemented method for determining the position of a vehicle unlocking device relative to a position of a vehicle, the method comprising the steps of: receiving, from a plurality of sensors arranged at the vehicle, a distance indication from each sensor of the plurality of sensors, each distance indication indicating a measured distance between the respective sensor and the vehicle unlocking device; generating, based on each measured distance, a region having an inner and an outer boundary, each region being associated with one of the plurality of sensors; determining an overlap region according to an overlap of each of the regions; and determining the position of the vehicle unlocking device according to the overlap region.

In a further aspect, the step of determining an overlap region according to an overlap of each of the regions comprises generating, for at least one of the plurality of sensors, a plurality of overlap determination points; and setting the overlap region according to a set of the plurality of overlap determination points being located within each of the regions.

Therefore, it is possible to determine the position of the tracked object even if the determination of the distance may have inaccuracies.

In a further aspect of the invention, each of the plurality of overlap determination points is associated with one of the plurality of sensors.

In the further aspect, the step of generating the overlap region comprises setting a first subset of overlap determination points on the inner and outer boundary and/or between the inner and outer boundary of a first region; and determining that a second subset of the first subset of overlap determination points is located on the inner and outer boundary and/or between the inner and outer boundary of a second region.

Therefore, it is possible to efficiently determine a subset of points which can estimate the position of the tracked object.

In the further aspect, the method further comprises: determining that the second subset of overlap determination points is located on the inner and outer boundary or between the inner and outer boundary of at least a third region.

Therefore, it is possible to efficiently determine a subset of points that can further determine the position of the tracked object.

In the further aspect, the step of determining the position of the vehicle unlocking device according to the overlap region further comprises: determining an average position based on a position of each of the set of the plurality of overlap determination points being located within each of the regions.

Therefore, based on the average position, it is possible to determine the position of the tracked object.

In the further aspect, wherein the step of determining an overlap region according to an overlap of each of the regions comprises: generating, for another of the plurality of sensors, a plurality of overlap determination points, and setting the overlap region according to a set of the plurality of overlap determination points being located within each of the regions.

Therefore, it is possible to repeat the steps for determining an overlap region on each of the sensors, and further determine the estimated position of the tracked object.

In the further aspect, wherein the step of determining the position of the vehicle unlocking device according to the overlap region further comprises: determining, a second position, based on the average positions based on a position of each of the set of the plurality of overlap determination points, generated for another of the plurality of sensors, being located within each of the regions.

Therefore, by determining the average from different sensors, it is possible to better determine the estimated position of the tracked object based on the determined averages.

In a further aspect, the step of generating a region comprises: shortening each measured distance by a predefined first value to determine the inner boundary of the respective region; and/or prolonging each measured distance by a predefined second value to determine the outer boundary of the respective region.

Therefore, it is possible to determine the boundary of a region which allows factoring the inaccuracies in the distance determination.

In a further aspect, wherein the step of receiving, from the plurality of sensors arranged at the vehicle, a distance indication from each sensor of the plurality of sensors comprises: measuring a distance between each of the plurality of sensor and the vehicle unlocking device based on a wireless signal.

Therefore, it is possible to determine the distance based on any wireless signal.

In a further aspect, each region associated with one of the plurality of sensors is at least partly sphere-shaped.

Therefore, it is possible to efficiently determine the regions.

In another aspect of the invention, the method further comprises determining the operating instruction based on the determined position of the vehicle unlocking device for: unlocking one or more doors of the vehicle; switching on the vehicle; or initiating an operation command for a device of the vehicle.

In another aspect of the invention, a computer program comprising instructions, which when executed by a computer, causing the computer to perform the method is claimed.

In another aspect of the invention, an apparatus comprising means for performing the method is claimed.

In another aspect of the invention, a vehicle comprising the apparatus comprising means for performing the method is claimed.

**Brief Description of the Drawings**

Various aspects of the present invention are described in more detail in the following by reference to the accompanying figures without the present invention being limited to the embodiments of these figures.

Fig. 1          shows an example implementation of the distribution of distance sensors in a vehicle according to an aspect of the invention.

Fig. 2          shows the top view showing the distance measurements from the sensors to the tracked vehicle unlocking device according to an aspect of the invention.

Fig. 3          shows a two-dimensional top view of the regions detected around each of the sensors intersecting at the position of the tracked vehicle unlocking device according to an aspect of the invention.

Fig. 4          shows a two-dimensional top view of such a region as a double-walled region, in a two-dimensional top view, with respect to a distance determined from one of the sensors (i-th sensor) according to an aspect of the invention.

Fig. 5          shows the two-dimensional top view of a double-walled regions around three of the plurality of sensors according to an aspect of the invention.

Fig. 6A to 6C   shows a two-dimensional top view, isometric view and front view, respectively, of the overlap region formed by the overlap of the double-walled regions formed around all plurality of the according to an aspect of the invention.

Fig. 7A to 7C   shows an isometric, top, and front view of the grid of points forming the search grid around one of the sensors according to an aspect of the invention.

Fig. 8A, 8B     shows the isometric view and the front view of the cloud of points from the overlap of the search grids from the plurality of sensors according to an aspect of the invention.

Fig. 9          shows a flow chart of the position determination method according to an aspect of the invention.

**Detailed description**

Technology such as Bluetooth-based location (phase-based ranging, time of flight, and angle of arrival) and Ultrawideband-based location (focused on the time of flight) can be used to obtain a better estimation of the positioning. Such location technologies are classified under "active" positioning technologies because they require both devices (called "anchor" for a device with a fixed position and "tag" for a device with an unknown position) to share communication links to exchange information.

In such technologies, the distance can be measured by a) time of flight, measuring the time between sending a message and receiving a response (two-way ranging), and/or b) Phase-based ranging, measuring the difference of phases for arriving wave depending on frequency.

The present invention makes use of wireless technologies to determine the position of any tracked object in relation to another object. By leveraging this technology, the invention enables a wide range of applications for seamless object tracking. For instance, it can be used to provide a vehicle access system for determining the position of the vehicle unlocking device. Specifically, any technologies which enable measuring the distance between a sensor and the vehicle unlocking device based on a wireless signal may be used. While the present invention is explained in the context of a vehicle access system, it is not limited thereto and can be used in other applications.

For instance, by making use of Bluetooth (for authentication and communication) and/or UWB - Ultra wideband time of flight for positioning of the device, it is possible to provide positioning of multiple anchor devices.

However, distance measurement may be affected by the environment's combination of reflections and absorption of the direct path, frequently causing errors.

The present invention provides a system and method for determining the positioning of the vehicle unlocking device by using the measured distances.

In one embodiment of the invention, the position determination system can be implemented in a vehicle, for instance, as a Phone as a Key (PaaK) system. Other systems where the system is capable of providing information about the distance between a sensor (e.g., UWB sensors) and the tracked vehicle unlocking device (e.g., a smartphone that operates the ultra-wideband (UWB) technology) can also be used.

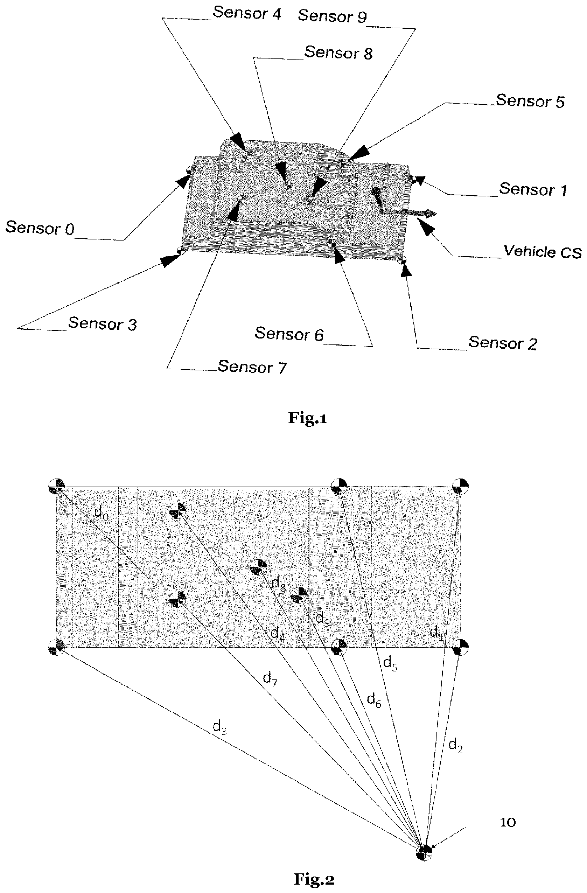

**Fig. 1** of the present invention describes one such embodiment where sensors are provided on a vehicle. The sensors are capable of measuring the distance, for instance, the distance between the sensor and a vehicle unlocking device. This can be done by means of wireless signal, for instance, by emitting and receiving radio-frequency electromagnetic signals. In one embodiment, the sensors may be in the form of a UWB sensor, which is capable of determining the distance to a vehicle unlocking device using UWB. For instance, the vehicle unlocking device may be a smartphone/key, but not limited thereto. However, another type of sensors and vehicle unlocking device may be used, which are capable of determining the distance between the sensor and the vehicle unlocking device.

In the embodiment, a plurality of sensors is provided in predetermined positions. For instance, in the case of position determination for the vehicle key, the sensors are mounted at the vehicle (either in, or on the vehicle) at predetermined positions. The position of these sensors may be described in the vehicle coordinate system, referred to hereafter as the local coordinate system, which is in relation to the vehicle. This can enable determining the position of the vehicle unlocking device in relative to the position of the vehicle. However, it is also possible to determine, based on the global coordinate system, describe the position and orientation of the car in three-dimensional space and accordingly identify the position of the sensors based on their relationship with the vehicle. In other applications, the sensors may be suitably located on other applications, and positions determined accordingly.

The number of sensors may also vary, depending on the application and/or the desired accuracy. For instance, ten sensors (Sensor 0 to Sensor 9) are provided in this example embodiment of vehicle key determination in Figure 1. However, more sensors or less sensors may be provided. In a preferred embodiment, at least three sensors are provided, which allows a proper determination according to the present determination method.

Each of the sensors is capable of determining the distance to the vehicle unlocking device. In particular, a distance indication from each sensor of the plurality of sensors arranged at the vehicle is received, wherein each of the distance indications indicates a measured distance between the respective sensor and the vehicle unlocking device.

As shown in **Figure. 2**, each of these distances (do to d9) shown are the distance indicated from each of the sensors of the vehicle to the vehicle unlocking device 10. The distance measurement can be performed in a discrete, iterative manner, i.e., the distance signal is not a variable continuous in time but rather consists of discrete values registered once per a certain time period. The frequency of such measurements can be varied and may also be set depending on the system design, application, type of hardware utilized, and other factors. In an example vehicle key determination, such as PaaK applications, the frequency of such determination is performed between 1 to 15 cycles per second.

The distance measured may also be a combination of measurements from each of the iterations and combined into a distance vector d, such that in every iteration step, vector d is filled with the data collected from all the sensors, i.e., for a system consisting of n sensors, vector of n distance values d=[d_0,...,d_(n-1)] is stored.

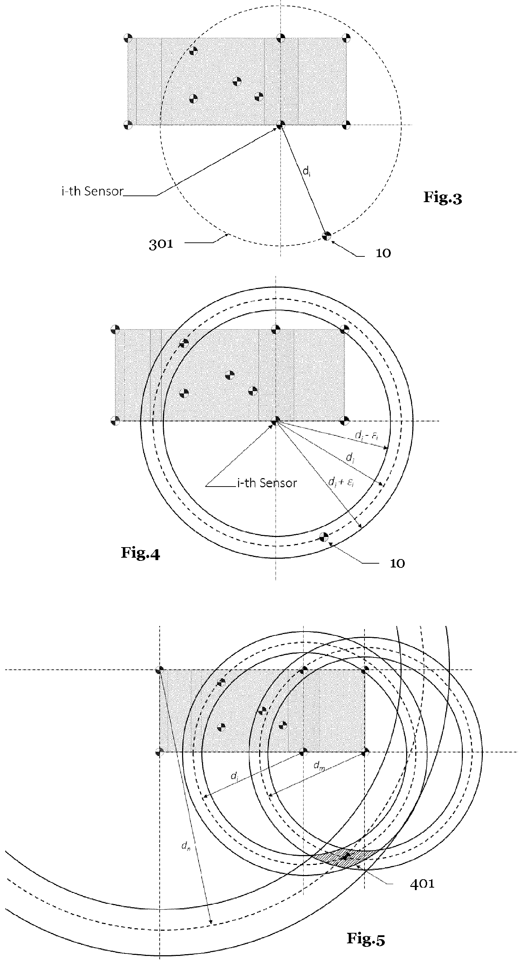

In order to determine the position of the vehicle unlocking device, a region is generated around the sensors. **Figure. 3** shows a top view of one such region generated around one of the sensors (i-th sensor) based on the distance of the vehicle unlocking device (i.e., tracked key 10) measurements from the sensor (i-th sensor) to the tracked vehicle unlocking device. The sensor-based system, such as the UWB sensors, is capable of measuring only the distances. However, it may not detect the angles (orientation) describing the location of the tracked vehicle unlocking device. Therefore, each individual measurement of the tracked vehicle unlocking device may be located on a surface of a region that is spanned over the sensor.

The region is generated such that the distance from the sensor to the detected vehicle unlocking device is the distance from a point within the region to a point on the boundary of the region.

In the example embodiment, the region may be in the form of a sphere or at least partially spherical. However, other shapes of the region may be envisaged based on different factors such as the area of determination necessary, the focus of the sensor, etc. In the example embodiment, for ease of understanding, where the region is shown as a sphere or at least partly spherical around the sensor, the point within the region is the sphere's center point, where the sensor is positioned. Therefore, as seen from the top view shown as a simplified, two-dimensional idealization in Fig.3, the sphere has a radius that is equal to the distance between one of the sensors (i-th sensor) to the vehicle unlocking device.

The region is generated around each of the sensors which were able to detect the distance to the vehicle unlocking device. By determining the coordinate position of the intersection region, which is formed by the overlap of boundaries of a plurality of the regions around the sensors, it is now possible to determine the vehicle unlocking device's location.

In an embodiment of the invention, it is possible to estimate better the determination of the location of the vehicle unlocking device. This is done by factoring that there may be inaccuracy in distances measured by the sensors.

For instance, the distance measured by the sensors may include certain uncertainties. In such cases, it may be that the overlap of boundaries is not at one point. Moreover, the exact level of uncertainty for each measurement is not known, resulting in various errors associated with the elements of vector $d$.

The present invention enables better estimates for determining the position of the vehicle unlocking device even in such a situation.

In the embodiment, it is assumed that each sensor may have a certain uncertainty when determining the distance to the vehicle unlocking device. Therefore, when the region being generated around one of the plurality of sensors has an inner and an outer boundary. In particular, the distance measured is shortened by a predefined first value to determine the inner boundary of the region. Additionally, the distance measured from the sensor is prolonged by a predefined second value to determine the outer boundary of the region.

That is, each distance of the sensor (i-th sensor) to the key is expressed as a sum of the measured (nominal) value $d_i$ and an uncertainty $\varepsilon_i$, which may be a predetermined value defined a priori or based on the sensor. For instance, the uncertainty factor $\varepsilon_i$ is expressed as a fraction of the nominal distance value $d_i$, e.g., $\varepsilon_i = 0.1 d_i$. By using such an uncertainty factor, two distances are determined such that the vehicle unlocking device from the i-th sensor is bounded by a region having two walls, each of the walls having the distance.

The embodiment is described by **Figure. 4,** which shows a top view of such a region as a double-walled region, in a two-dimensional representation, with respect to a distance determined from one of the sensor (i-th sensor) to the tracked key 10. Using the said distance, a first distance for the inner boundary, and a second distance for the outer boundary are determined. For better understanding, the distance from the sensor are described by the distance $R_{min}^{i}$ and $R_{max}^{i}$ in the following manner (Eq. 1):

$$R_{min}^{i} = d_i - \varepsilon_i, \ i = 0, \dots, (n-1) \qquad \text{[Equation. 1]}$$

$$R_{max}^{i} = d_i + \varepsilon_i, \ i = 0, \dots, (n-1)$$

where: n - number of sensors mounted in a vehicle.

In the example embodiment, the region is the form of a sphere, but other shapes of the region may be envisaged based on different factors such as the area of determination necessary, the focus of the sensor, etc.

In the embodiment where the region is the sphere, or at least partly spherical, it forms a double-walled sphere, or at least partly spherical region, having an inner and an outer radius from the position of the sensor to the boundary of each of the inner and outer spherical boundaries, respectively. In such a case, the double-walled region around the sensors (*i*), wherein the distance from a point within the region to a point on the inner boundary ( $R^i_{min}$ ) of the double-walled region is the first distance, and the distance from a point within the region to a point on the outer radius $R^i_{max}$ of the double-walled region is the second distance.

This measurement, as indicated in Eq. 1, is repeated for each iteration and for each sensor from which the distance is determined, and all the resultant measured nominal distances are then transformed into $[R^i_{min}, R^i_{max}]$ ranges spanned over the appropriate sensors.

As seen in **Figure. 5,** which is a two-dimensional top view of the double-walled regions shown around three of the plurality of sensors. The distances from these three sensors (*i, m* and *n*) are determined, where *i, m, n* ∈ < 0, ..., *n* - 1 > and double-walled regions formed around each of the sensors *i, m* and *n*. Furthermore, the shortened measured distance forming the inner boundary of the region, and the prolonged measured distance forming the outer boundary of the region are also determined and shown.

From these double-walled regions, an overlap region is formed according to the overlap of each of the regions. The overlap region, also called the intersection region 401, is a region where the double-walled regions intersect. The position of the vehicle unlocking device is determined according to the overlap region.

It must be noted that since the regions are three-dimensional, the overlap region where it intersects is irregularly shaped in the three-dimensional space.

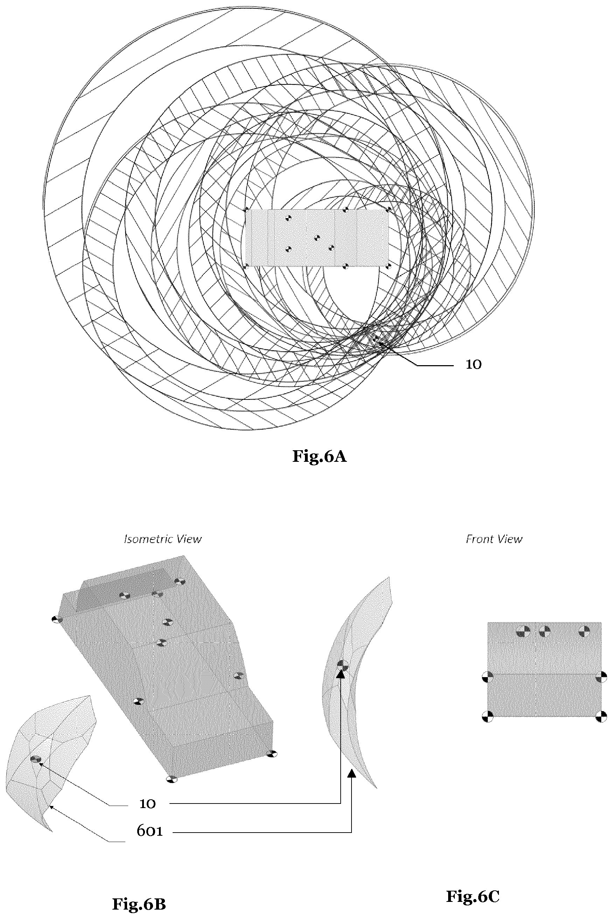

**Figure 6A to 6C** shows different views of the overlap region formed by the overlap of the double-walled regions formed around ten sensors in the vehicle. In particular, Figure 6A shows the top view of the double-walled regions formed around the sensors, each of the bounded regions between the walls being illustrated by different patterns having different diagonal lines with varied spacing. Figure 6B and 6C shows the isometric view, the front view of the vehicle, and the overlap region 601 formed by the overlap of the different double-walled regions. As can be seen from the figure, the overlap regions are formed by the intersection of the double-walled region around the tracked vehicle unlocking device 10, and has a volume of irregular shape. The position of the tracked vehicle unlocking device is provided such that it is positioned within the irregularly shaped overlap region.

The same analysis can be performed in every measurement iteration, leading to continuous estimation of instantaneous key position.

The position of the vehicle unlocking device is thus estimated to be in the overlap region, that is, an overlapping region formed by the plurality of double-walled regions around the sensors.

In a further embodiment of the invention, it is possible to provide a better-estimated determination of the position of the tracked vehicle unlocking device by determining a point within the overlap region.

For determining the point, the present invention employs the use of a grid of points (called the search grid) which are provided within the region bounded by the inner and the outer walls of the double-walled region, which is formed around each of the sensors.

Therefore, for at least one of the plurality of sensors, a plurality of points is generated.

That is, to identify the described overlap region for each input distance vector *d* = [*d*₀, ..., *d*ₙ₋₁], a cloud of points, also called overlap determination points, is created inside the calculated search region $[R^i_{min}, R^i_{max}]$ , *i* = 0, ..., (*n* - 1). Thereby generating a plurality of points ( $p^i_j$ ) in the three-dimensional coordinate system within the inner radius ( $R^i_{min}$ ) and the outer radius ( $R^i_{max}$ ) of one of the pluralities of the double-walled region formed around the sensor (*i*).

This process of generating points is performed iteratively, with a separate grid of points for each of the double-walled regions formed by changing the *i-th* sensor until all the grids are formed around all the sensors for which the distance was determined. Therefore, for each of the plurality of overlap determination points are associated with one of the plurality of sensors.

It is then determined which of the points ( $p^i_j$ ) are within the overlap region formed by overlap with the other of the plurality of double-walled regions. Therefore, it is possible to set the overlap region according to a set of the plurality of overlap determination points being located within each of the regions. Such a determination will provide a set of points falling within the double-walled region, based on which a point ( $[x^i_c, y^i_c, z^i_c]$ ) can be determined.

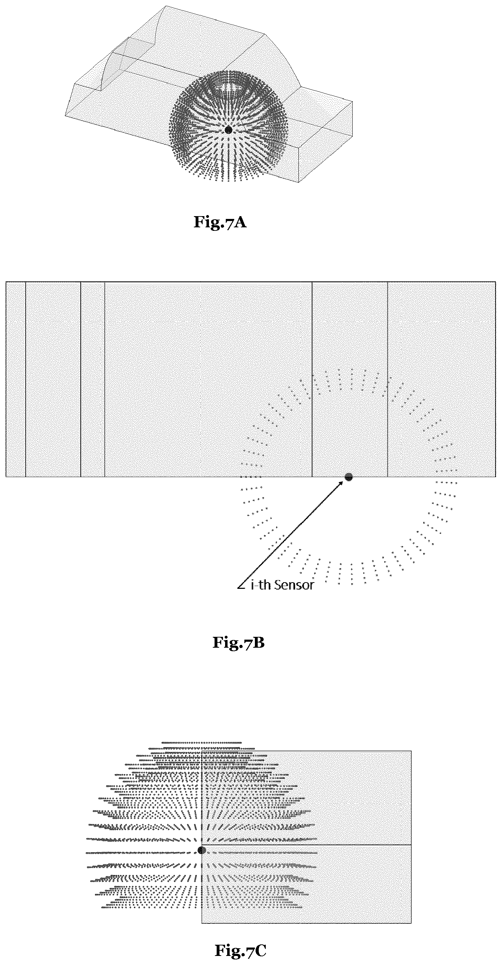

**Figure 7 A to 7 C** depicts different views of the grid of points forming the search grid around one of the sensors according to an aspect of the invention.

Every grid of points is created in a structured manner giving it a form of a regular spatial grid in the region in the three-dimensional coordinate system. Each search grid is generated in a local coordinate system associated with the vehicle and fixed in the *i-th* sensor's mounting point $[x_S^i, y_S^i, z_S^i]$.

In the example where the region is a sphere, or at least partly spherical, the grid of points is generated around the sensor, as shown in **Figure 7A**, which is an isometric view of the vehicle having a search grid formed around one sensor (i-th sensor).

The grid of points is provided as a plurality of layers of points on the inner boundary and the outer boundary and/or between the inner boundary and the outer boundary of the double-walled region formed in the horizontal direction.

Therefore, these points, also called overlap determination points, form a first subset of overlap determination points on the inner and outer boundary, and may also be formed between the inner and outer boundary of the region.

Each of the layers of points is separated by a distance. Therefore, each of the layer of points which is generated has a distance ( $r_l^i$ ) which is within the distance of the point on the inner boundary ( $R_{min}^i$ ) and the distance of the point on the outer boundary ( $R_{max}^i$ ) of the region.

In the preferred example where the region is a sphere, or at least partly spherical, the grid of points is provided as layers, each having the radius r, which describes the distance between the grid origin (i.e., the i-th sensor) and the points in the search region. As can be seen in **Figure 7B,** the structured pattern of the *i-th* search grid, consists of multiple spherical layers of points, for which the distance from the grid's origin is the same. The number of grid layers, denoted hereafter as *L,* is defined *a priori,* such that each separate layer *l* is indicated as *l* = 0, ..., (*L* - 1). Moreover, the consecutive layers of the *i-th* search range are generated inside the appropriate search range boundaries. For understanding, the boundaries $[R_{min}^i, R_{max}^i]$ , are such that the value of the radius $r_l^i$ for the *l-th* layer fulfills Equation 2:

$$R_{min}^i \le r_l^i \le R_{max}^i, \quad i = 0, ..., (n-1) \qquad \text{[Equation 2]}$$

The requested number of the search grid layers can vary, but the number is typically defined as being between 3 and 10, i.e., 3 <= *L* <= 10.

Therefore, each of the plurality of layers of points is separated by a spatial distance (dr) in the radial direction based on the number of layers (L) and the distance of the point on the inner boundary ( $R_{min}^i$ ) and the distance of the point on the outer boundary ( $R_{max}^i$ ) of each of the double-walled regions.

For each *i-th* search grid, the distance *dr* between the consecutive layers, which describes the radial resolution of the grid, can be calculated using Equation 3 as below:

$$dr^i = \frac{R_{max}^i - R_{min}^i}{L-1} \qquad \text{[Equation 3]}$$

Each of the points on the search grid is also separated in the vertical direction. In such a case, each of the points is additionally defined as having an angular elevation described by azimuth and elevation angles such that each of the layers has an azimuth angle ($\varphi$) and elevation angle ($\theta$) around the sensor, which is within a minimum angle ($\varphi_{min}$, $\theta_{min}$), and a maximum angle ($\varphi_{max}$, $\theta_{max}$), and each of the points on the layer is generated with a predefined azimuth and elevation angular resolution.

In the example embodiment, the region is in the form of a sphere, or at least partly spherical, the points are formed with a spherical coordinate system, and the positions of the points are described by azimuth ($\varphi$) and elevation ($\theta$) angles, as well as the radius (*r*) parameters. Therefore, in order to generate the grid of points around a sensor, the azimuth ($\varphi$) and elevation ($\theta$) angles are defined, for understanding, as follows:

- Azimuth angle $\varphi$ range: $\varphi_{min} \le \varphi \le \varphi_{max}$,

- Elevation angle $\theta$ range: $\theta_{min} \le \theta \le \theta_{max}$.

In order to optimize the formation of the regions and the grid of points, the values of the azimuth and elevation angles are limited such that it allows the elimination of the zones in which the presence of the key is less likely, e.g.,

beneath the ground level. This improves the time efficiency of the algorithm.

Typical values for the $\varphi$ and $\theta$ search angles are the following:

- Azimuth angle $\varphi$ range: -180° $\leq \varphi \leq$ 180°,

- Elevation angle $\theta$ range: -70° $\leq \theta \leq$ 90°.

However, these values may depend on the particular implementation and shall be chosen with respect to the specific system setup, i.e., the location of the sensors in a vehicle.

The grid of points is also provided with an angular resolution between each of the grid of points in azimuth $d\varphi$ and elevation $d\theta$ directions for being separated in the vertical direction. These values are also defined by considering the required number of points for accuracy and may also be dependent on the expected sensor's measurement range and required spatial target localization accuracy. For the example vehicle key position system, these angular resolution values are typically defined as 1° $\leq d\varphi, d\theta \leq$ 10°.

In the example search grid formed around a sensor for the vehicle key position determination system, the following parameters were used as examples:

- Azimuth range: < -180°; 180° >,
- Elevation range:< -30°; 70° >,
- Azimuth angular resolution: 7°,
- Elevation angular resolution: 7°,
- No. of points in radial direction: 5,
- Nominal measured distance: 1*m*,
- Assumed measurement uncertainty: 0.1*m*.

It will now be determined which of the points ( $p_j^i$ ) in the search grid are within the overlap region formed by overlap with the other of the plurality of search grids formed within other double-walled regions.

In particular, by comparing the previously generated first subset of overlap determination points with the overlap region formed by the inner and outer boundary and/or between the inner and outer boundary of a second region formed around another sensor, it is possible to determine a further subset of overlap determination point.

This can be determined by comparing if each of the *j-th* point $p_j^i = [x_j^i, y_j^i, z_j^i]$ that are from the generated *i-th* search grid, is checked to determine if they are within the search grid formed in the search ranges $[R_{min}^k, R_{max}^k]$ , $\forall k \in< 0, n$ - 1 >, $k \neq i$ and spanned over all other (i.e., non *i-th*) sensors. Such a comparison is possible by various means, and as an example of such comparison is possible, the point is determined to be within the search range if it satisfies the following set of equations (Equation. 4):

$$\begin{cases} \left(x_j^i - x_S^k\right)^2 + \left(y_j^i - y_S^k\right)^2 + \left(z_j^i - z_S^k\right)^2 \geq \left(R_{min}^k\right)^2 \\ \left(x_j^i - x_S^k\right)^2 + \left(y_j^i - y_S^k\right)^2 + \left(z_j^i - z_S^k\right)^2 \leq \left(R_{max}^k\right)^2 \end{cases} \quad \forall j \in M^i, \forall k \in< 0, n-1 >, k \neq i$$

$$- \quad [\text{Equation 4}]$$

wherein:

- *n* is the number of sensors
- *i* is one of the sensor,
- *k* is the other sensors except *i-th* sensor

- $M^i$ is a set of all points within inner boundary ( $R_{min}^i$ ) and the outer boundary ( $R_{max}^i$ ) of the double-walled region formed around the *i-th* sensor;
- *j* is the number of points
- $x_j^i, y_j^i, z_j^i$ - coordinate position of the each of the j-th point in the double-walled region around the *i-th* sensor

- $x_S^k, y_S^k, z_S^k$ - coordinate position of the k-th sensor, such that *k* iterates over all the sensors, except for the *i-th* sensor ($\forall k \in <0, n - 1>, k \neq i$)

- $R_{min}^k, R_{max}^k$ are the minimum and maximum value of the search range around *i-th* sensor.

By testing if the condition described in Equation 4 for each of the points $p_j^i$ from the *i-th* search grid is fulfilled, it can be determined which of the point intersect the other search grid formed around the other sensor (*j-th* sensor).

On the other hand, if the points are detected as not fulfilling the condition, it is determined as not intersecting at least one of the other search grids and thus is removed from further testing of the consideration with other search grids. This further optimizes the determination process when checking the condition with the points on the next search grid.

In effect, after all the points for the *i-th* search grid are tested, only the points are located at the intersection of the *n* search regions.

Depending on the shape of the region, it is possible that there may be two search regions that intersect with the analyzed *i-th* grid. Hence, for a better estimate of position determination, in the embodiment of the invention, at least three search regions may produce an intersection in order to estimate the location of the tracked vehicle unlocking device.

Therefore, the method of comparing the subset of overlap determination points is repeated with an overlap region formed by the inner and outer boundary and/or between the inner and outer boundary of a third region formed around another sensor. This enables determining which of the second subset of overlap determination points is located on the inner and outer boundary or between the inner and outer boundary of at least a third region.

Therefore, if the points of the analyzed search grid are determined as being located inside less than two other search regions, the measurement iteration is skipped.

From the determined subset of overlap points, it is possible to determine the position of the vehicle unlocking device. Specifically, based on the position of each of the set of the plurality of overlap determination points being located within each of the regions, it is possible to determine the position of the vehicle unlocking device based on these points. The position can be, for instance, an average position based on the subset of overlap points formed by the overlap of the regions.

Different methods may be used to determine the average position and one such method of how the points are determined based on the analyzed determination of the remaining points $p_j^i = [x_j^i, y_j^i, z_j^i]$ in the analyzed *i-th* search grid based on Equation. 4. Based on the remaining points, an estimated position for the tracked object can be determined.

In example, to understand the candidate position $[x_c^i, y_c^i, z_c^i]$ of the tracked key can be calculated as a centroid of the truncated *i-th* point cloud, as described by Equation 5 below:

$$
\begin{aligned}
x_c^i &= \frac{\sum_{j=1}^{t} x_j^i}{t} \\
y_c^i &= \frac{\sum_{j=1}^{t} y_j^i}{t} \\
z_c^i &= \frac{\sum_{j=1}^{t} z_j^i}{t}
\end{aligned}
\qquad\qquad \text{[Equation - 5]}
$$

where: *t* - number of remaining points in the truncated *i-th* search grid, located in the search regions intersection.

In this way, it is possible to determine the vehicle unlocking device's position, which is the centroid of the remaining points.

This process may be repeated for other sensors. That is, the determination of overlap region may include generating a plurality of overlap determination points for another of the plurality of sensors and then setting the overlap region according to a set of the plurality of overlap determination points being located within each of the regions.

In another embodiment of the invention, it is possible to improve further the accuracy of determining the position of the vehicle unlocking device.

For instance, it may be possible that due to inaccuracies in the distance measurement by the sensor, some of the measured nominal distance values $d_i$ maybe different from the real sensor-to-key distance. As a consequence, the search region $[R_{min}^i, R_{max}^i]$ calculated may result in some inaccurate distance value $d_i$, which may affect the determination of the position of the vehicle unlocking device, leading to further inaccurate calculations of the intersection region.

In order to provide a better estimate determination, the process of determination of position may be repeated based on other sensors.

That is, the determination of overlap region may include generating a plurality of overlap determination points for another of the plurality of sensors compared to the sensor was previously used. Based on the points, the overlap region is set according to a set of the plurality of overlap determination points located within each of the regions. This enables the determination of the position for another of the plurality of sensors.

From this determination, a second position located within each of the regions is determined, which is based on the average positions based on the position of each of the sets of the plurality of overlap determination points, generated for another of the plurality of sensors. The second position is thus a better estimate of position, which is a cumulative average of the positions previously determined.

Different methods may be used to determine the second position, also a cumulative average position, and one such method is by generating a plurality of points ( $p_j^i$ ) in the three-dimensional coordinate system for each of the sensors, and the calculate the centroid point based on the subset of points determined for each of the sensors.

In an example, for understanding, a *C* matrix of *n* candidate locations can be obtained for one input vector $d = [d_0, ..., d_{n-1}]$, as described by Equation 6:

$$C = \begin{bmatrix} x_c^0 & y_c^0 & z_c^0 \\ \vdots & \vdots & \vdots \\ x_c^{n-1} & y_c^{n-1} & z_c^{n-1} \end{bmatrix} \qquad \text{[Equation - 6]}$$

Based on this plurality of average points determined for each of the sensors, it is possible to calculate a second point, which is a further candidate position point ($[x_{key}, y_{key}, z_{key}]$) for determination of the position of the vehicle unlocking device.

Therefore, the final estimation of the tracked key position $[x_{key}, y_{key}, z_{key}]$ is obtained by averaging the columns of the *C* matrix. In an example, and for understanding, the tracked key position can be obtained as described by Equation. 7 below:

$$x_{key} = \frac{\sum_{i=0}^{n-1} x_c^i}{n}$$

$$y_{key} = \frac{\sum_{i=0}^{n-1} y_c^i}{n} \qquad \text{[Equation - 7]}$$

$$z_{key} = \frac{\sum_{i=0}^{n-1} z_c^i}{n}$$

These values of $[x_{key}, y_{key}, z_{key}]$ are reported by the algorithm as the instantaneous position of the tracked vehicle unlocking device for one input distance vector $d = [d_0, ..., d_{n-1}]$.

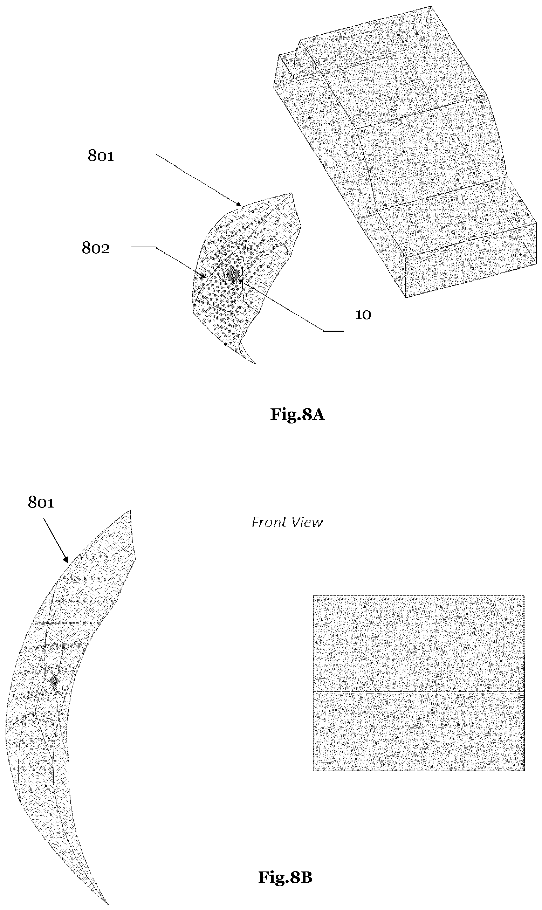

Figure 8A and 8B, shows the isometric view and the front view of the resultant cloud of points from the intersection region 801 of the search grids from the plurality of sensors. The intersection region is shown in an isometric view and with accurate geometry, depending on the scale and placement of the sensors. Also shown is the resulting point cloud 802, as determined as being inside the intersection region. From the resulting point cloud, it is possible to provide an estimation position of the tracked key 10, which is represented by tracked key $[x_{key}, y_{key}, z_{key}]$ values is the last step of a single algorithm iteration. In the next iteration, a new distance vector *d* is measured by the distance sensors, and the procedure begins anew.

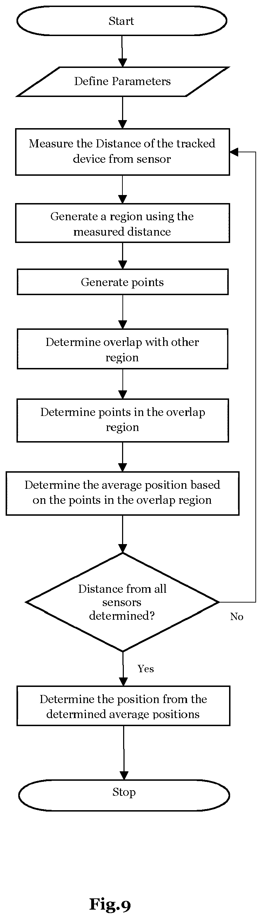

Figure. 9 shows a flow chart of the position determination method according to an aspect of the invention.

First, the parameters which are needed for the determination of the position may be defined. These parameters may depend on the configuration of the method, and can be any of the parameters which were used for the search grid formation, for example, any of the Azimuth range, elevation range, azimuth angular resolution, elevation angular resolution, number of points in the radial direction, the nominal measured distance, assumed measurement uncertainty, etc.

Next, considering one of the sensors (i-th), the distance of the tracked device, which is the vehicle unlocking device, from the sensor is determined.

Next, a region is determined around the sensor based on the determined distance. The region has an inner and an outer boundary, which are determined based on the determined distance. For instance, the inner boundary is by shortening the measured distance by a predefined first value, and the outer boundary is by prolonging the measured distance by a predefined second value.

Next, for one of the plurality of sensors, a plurality of points, also called the overlap determination points, are generated. These pluralities of overlap determination points are associated with one of the plurality of sensors. The points are provided on the inner and outer boundary and/or between the inner and outer boundary of the generated region.

The points are generated based on the parameters defined earlier or provided for each of the generations. In an embodiment, the plurality of points in the three-dimensional coordinate system comprises a plurality of layers of points towards the boundary. Each of the layers of points generated may have a distance that is within the distance of the point on the inner boundary and the distance of the point on the outer boundary of the region. Each layer of points has an azimuth and/or elevation angle, minimum and maximum angle, and predetermined azimuth and elevation angular resolution. Furthermore, each of the plurality of layers of points may be separated by a spatial distance ($dr$) in a horizontal direction based on the number of layers (L), and the distance of the point on the inner boundary and the distance of the point on the outer boundary of each of the double-walled region.

Next, an overlap region, which is the intersection of the region, is determined. The intersection region, which is formed, is the overlap of the boundaries of a plurality of surfaces of the regions around the sensors. The vehicle unlocking device is located at the said overlap region.

Next, points in the overlap region are determined. The points in the overlap region are determined by setting a first subset of overlap determination points on the inner and outer boundary and/or between the inner and outer boundary of a first region, and determining that a second subset of the first subset of overlap determination points is located on the inner and outer boundary and/or between the inner and outer boundary of a second region.

Next, the average position based on the points in the overlap region is determined. That is, an average position based on a position of each of the set of the plurality of overlap determination points being located within each of the regions is determined. This enables the determination of the location of the vehicle unlocking device.

Next, it is determined if the distance from all sensors was determined. As indicated above, the region around the sensor is generated for those sensors for which the distance from the vehicle unlocking device is determined.

In the case where the distance from the sensor was determined, some of the previous steps of the method are performed again for such a sensor. That is, the steps of generating a plurality of overlap determination points for another of the plurality of sensors is performed, and the overlap region according to a set of the plurality of overlap determination points being located within each of the regions is set.

It is then determined if the steps are performed for all the sensors where the distance was determined. Otherwise, the steps are repeated for such sensors.

If the method is performed for all the sensors where the distance was generated or for the predetermined number of sensors, the location of the vehicle unlocking device is determined.

Next, in case of an estimate position determination, a second position is determined. The second position is based on the average positions based on a position of each of the set of the plurality of overlap determination points, generated for another of the plurality of sensors, being located within each of the regions. In this way, the location of the vehicle unlocking device, which is surrounding the vehicle, can be determined.

By determining the location of the vehicle unlocking device, such as a vehicle key, which surrounds a vehicle, it is possible to provide the information to further enable different functions in the vehicle. For instance, it is possible to instruct, based on the determined position, the vehicle system to enable physical access to the vehicle, such as by opening the door of the vehicle. It is also possible to control the ignition system, the steering command, or other control systems in the vehicle.

Other operation instruction includes initiating an operation command for a device of the vehicle. For instance, operation command to control functions for the vehicle may include providing lighting control, determining the vehicle's occupancy, enabling the navigation system, or providing input for determining other predictive actions.

For instance, by using the information on the location of the vehicle unlocking device, it is possible to provide advanced vehicle access systems such as providing more sophisticated rules for accessing the vehicle, e.g., opening only the door which is closest to the vehicle unlocking device. Lighting control, such as switching on the light closest to the vehicle, and unlocking device location. Passenger occupancy identification is based on the path with which the passenger is entering the vehicle. It is possible to identify the seat to be occupied by the passenger, which may allow individualized settings to be applied for the seat based on the passenger. It is also possible to identify if the vehicle is in an open or closed location, such as a parking garage. Such information may assist in providing advanced navigation control.

Furthermore, the information may be provided as further input for artificial intelligence-based systems to train the system and provide personalized control instruction based on the information.

The invention also provides a system having a suitable processing device that can perform the method described above.

In particular, the method may be implemented in terms of a computer program that may be executed on any suitable data processing device comprising means (e.g., a memory and one or more processors operatively coupled to the memory) being configured accordingly. The computer program may be stored as computer-executable instructions on a non-transitory computer-readable medium.

Embodiments of the present disclosure may be realized in any of various forms. For example, in some embodiments, the present invention may be realized as a computer-implemented method, a computer-readable memory medium, or a computer system.

In some embodiments, a non-transitory computer-readable memory medium may be configured so that it stores program instructions and/or data, where the program instructions, if executed by a computer system, cause the computer system to perform a method, e.g., any of the method embodiments described herein, or, any combination of the method embodiments described herein, or, any subset of any of the method embodiments described herein, or, any combination of such subsets.

In some embodiments, a computing device may be configured to include a processor (or a set of processors) and a memory medium, where the memory medium stores program instructions, where the processor is configured to read and execute the program instructions from the memory medium, where the program instructions are executable to implement any of the various method embodiments described herein (or, any combination of the method embodiments described herein, or, any subset of any of the method embodiments described herein, or, any combination of such subsets). The device may be realized in any of various forms.

The apparatus providing a location determination method is provided in a vehicle, such as automobiles, robots, etc.

As indicated earlier, the present invention enables tracking the position of any desired object in relation to another object using wireless technology and can be used in other applications, for example:

- Logistics and Inventory Management to track the location of goods, optimize inventory control, and streamline supply chain operations.

- Asset tracking, such as equipment, machinery, or high-value items, ensuring their real-time location and enhancing asset management efficiency.

- Navigation Systems facilitate indoor navigation in large venues like airports, shopping malls, or museums, helping users navigate through complex spaces.

- Security and Surveillance systems to monitor the movement of people or objects within a designated area, enhancing situational awareness and enabling proactive security measures.

- Personal Item Finders, like small devices such as key finders or wallet trackers, allowing users to easily locate misplaced personal belongings within a certain range.

- Smart Home Automation: The invention can be integrated into home automation systems to track the positions of objects or individuals, enabling context-aware automation and personalized experiences.

- Virtual and Augmented Reality applications to track the movement of users, enhancing immersion, interaction, and overall user experience.

Although specific embodiments have been described above, these embodiments are not intended to limit the scope of the present disclosure, even where only a single embodiment is described with respect to a particular feature. Examples of features provided in the disclosure are intended to be illustrative rather than restrictive unless stated otherwise. The above description is intended to cover such alternatives, modifications, and equivalents as would be apparent to a person skilled in the art having the benefit of this disclosure.

The scope of the present disclosure includes any feature or combination of features disclosed herein (either explicitly or implicitly), or any generalization thereof, whether or not it mitigates any or all of the problems addressed herein. In particular, with reference to the appended claims, features from dependent claims may be combined with those of the independent claims, and features from respective independent claims may be combined in any appropriate manner and not merely in the specific combinations enumerated in the appended claims.

**Claims**

1. A computer-implemented method for determining the position of a vehicle unlocking device relative to a position of a vehicle, the method comprising the steps of:

receiving, from a plurality of sensors arranged at the vehicle, a distance indication from each sensor of the plurality of sensors, each distance indication indicating a measured distance between the respective sensor and the vehicle unlocking device;

generating, based on each measured distance, a region having an inner and an outer boundary, each region being associated with one of the plurality of sensors;

determining an overlap region according to an overlap of each of the regions; and

determining the position of the vehicle unlocking device according to the overlap region.

2. The method of claim 1, wherein the step of determining an overlap region according to an overlap of each of the regions comprises:

generating, for at least one of the plurality of sensors, a plurality of overlap determination points; and

setting the overlap region according to a set of the plurality of overlap determination points being located within each of the regions.

3. The method of claim 2, wherein each of the plurality of overlap determination points is associated with one of the plurality of sensors.

4. The method any one of the claims 2-3, wherein the step of generating the overlap region comprises:

setting a first subset of overlap determination points on the inner and outer boundary and/or between the inner and outer boundary of a first region; and

determining that a second subset of the first subset of overlap determination points is located on the inner and outer boundary and/or between the inner and outer boundary of a second region.

5. The method of claim 4, wherein the method further comprises:

determining that the second subset of overlap determination points is located on the inner and outer boundary or between the inner and outer boundary of at least a third region.

6. The method of any one of the preceding claims 2-5, wherein the step of determining the position of the vehicle unlocking device according to the overlap region further comprises:
determining an average position based on a position of each of the set of the plurality of overlap determination points being located within each of the regions.

7. The method of any one of the preceding claims 2-6, wherein the step of determining an overlap region according to an overlap of each of the regions comprises:

generating, for another of the plurality of sensors, a plurality of overlap determination points, and

setting the overlap region according to a set of the plurality of overlap determination points being located within each of the regions.

8. The method of claim 7, when dependent on claim 6, wherein the step of determining the position of the vehicle unlocking device according to the overlap region further comprises:
determining, a second position, based on the average positions based on a position of each of the set of the plurality of overlap determination points, generated for another of the plurality of sensors, being located within each of the regions.

9. The method of any one of the preceding claims, wherein the step of generating a region comprises:

shortening each measured distance by a predefined first value to determine the inner boundary of the respective region; and/or

prolonging each measured distance by a predefined second value to determine the outer boundary of the respective region.

10. The method of any of the preceding claims, wherein the step of receiving, from the plurality of sensors arranged at the vehicle, a distance indication from each sensor of the plurality of sensors comprises:
measuring a distance between each of the plurality of sensor and the vehicle unlocking device based on a wireless signal.

11. The method of any one of the preceding claims, wherein each region associated with one of the plurality of sensors is at least partly sphere-shaped.

12. The method of any one of the preceding claims, wherein the method further comprises:
determining an operating instruction based on the determined position of the vehicle unlocking device for:

   - unlocking one or more doors of the vehicle;
   - switching on the vehicle;
   - initiating an operation command for a device of the vehicle.

13. A computer program comprising instructions, which when executed by a computer, causing the computer to perform the method of any one of the claims 1 to 12.

14. An apparatus comprising means for performing the method of any one of the claims 1 to 12.

15. A vehicle comprising the apparatus of claim 14.

Sensor 4    Sensor 9

Sensor 8

Sensor 5

Sensor 1

Sensor 0

Vehicle CS

Sensor 3

Sensor 6

Sensor 2

Sensor 7

**Fig.1**

$d_0$

$d_8$

$d_9$

$d_4$

$d_1$

$d_7$

$d_5$

$d_6$

$d_3$

$d_2$

10

**Fig.2**

i-th Sensor

$d_i$

**Fig.3**

301

10

i-th Sensor

$d_i - \varepsilon_i$

$d_i$

$d_i + \varepsilon_i$

**Fig.4**

10

$d_i$

$d_m$

$d_n$

401

**Fig.5**

**Fig.6A**

10

Isometric View

Front View

10

601

**Fig.6B**

**Fig.6C**

**Fig.7A**

i-th Sensor

**Fig.7B**

**Fig.7C**

801

802

10

**Fig.8A**

801

Front View

**Fig.8B**

```
                    ┌─────────────────────┐
                    │        Start         │
                    └─────────────────────┘
                              │
                              ▼
                  ╱──────────────────────╲
                 ╱   Define Parameters     ╲
                ╱──────────────────────────╱
                              │
                              ▼
              ┌──────────────────────────────┐
              │ Measure the Distance of the   │◄──────┐
              │   tracked device from sensor  │       │
              └──────────────────────────────┘       │
                              │                       │
                              ▼                       │
              ┌──────────────────────────────┐       │
              │  Generate a region using the  │       │
              │       measured distance       │       │
              └──────────────────────────────┘       │
                              │                       │
                              ▼                       │
              ┌──────────────────────────────┐       │
              │        Generate points        │       │
              └──────────────────────────────┘       │
                              │                       │
                              ▼                       │
              ┌──────────────────────────────┐       │
              │   Determine overlap with      │       │
              │        other region           │       │
              └──────────────────────────────┘       │
                              │                       │
                              ▼                       │
              ┌──────────────────────────────┐       │
              │  Determine points in the      │       │
              │       overlap region          │       │
              └──────────────────────────────┘       │
                              │                       │
                              ▼                       │
              ┌──────────────────────────────┐       │
              │ Determine the average position│       │
              │ based on the points in the    │       │
              │       overlap region          │       │
              └──────────────────────────────┘       │
                              │                       │
                              ▼                       │
                        ╱─────────────╲               │
                       ╱  Distance from ╲    No        │
                      ╱     all sensors   ╲───────────┘
                      ╲    determined?    ╱
                       ╲─────────────────╱
                              │ Yes
                              ▼
              ┌──────────────────────────────┐
              │ Determine the position from   │
              │ the determined average        │
              │        positions              │
              └──────────────────────────────┘
                              │
                              ▼
                    ┌─────────────────────┐
                    │        Stop          │
                    └─────────────────────┘
```

**Fig.9**

Europäisches
Patentamt

European
Patent Office

Office européen
des brevets

# EUROPEAN SEARCH REPORT

**Application Number**

EP 23 17 4053

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/398787 A1 (KONG LIANG [US] ET AL) 24 December 2020 (2020-12-24) * abstract; figures 1-6 * * paragraph [0003] - paragraph [0034] * | 1-15 | INV. G07C9/00 B60R25/24 G01S5/14 H04W4/029 |
| X | US 2020/132807 A1 (KONG LIANG [US] ET AL) 30 April 2020 (2020-04-30) | 1,9-15 | |
| A | * abstract; figures 1-6 * * paragraph [0001] - paragraph [0048] * | 2-8 | |
| X | DE 10 2017 214800 A1 (CONTINENTAL AUTOMOTIVE GMBH [DE]) 28 February 2019 (2019-02-28) | 1,9-15 | |
| A | * abstract; figures 1, 2, 7 * * paragraph [0026] * * paragraph [0038] - paragraph [0039] * * paragraph [0042] - paragraph [0045] * | 2-8 | |
| X | CN 104 142 491 A (UNIV NORTHEAST DIANLI) 12 November 2014 (2014-11-12) | 13,14 | |
| A | * the whole document * | 1-12,15 | TECHNICAL FIELDS SEARCHED (IPC) |
| X | GUANGJIE HAN ET AL: "Localization algorithms of Wireless Sensor Networks: a survey", TELECOMMUNICATION SYSTEMS, BALTZER SCIENCE PUBLISHERS, BASEL, CH, vol. 52, no. 4, 1 April 2013 (2013-04-01), pages 2419-2436, XP002787411, ISSN: 1018-4864, DOI: 10.1007/S11235-011-9564-7 | 13,14 | G07C B60R G01S H04W |
| A | * page 2423 * | 1-12,15 | |
| A | US 2022/161759 A1 (HIROSE HIDEAKI [JP] ET AL) 26 May 2022 (2022-05-26) * abstract; figures 1-12 * * paragraph [0010] - paragraph [0063] * | 1-15 | |

The present search report has been drawn up for all claims

| Place of search | Date of completion of the search | Examiner |
|---|---|---|
| The Hague | 25 October 2023 | Holzmann, Wolf |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 17 4053

This annex lists the patent family members relating to the patent documents cited in the above-mentioned European search report.
The members are as contained in the European Patent Office EDP file on
The European Patent Office is in no way liable for these particulars which are merely given for the purpose of information.

25-10-2023

| Patent document cited in search report | | Publication date | Patent family member(s) | | Publication date |
|---|---|---|---|---|---|
| US 2020398787 | A1 | 24-12-2020 | CN | 114051468 A | 15-02-2022 |
| | | | EP | 3986756 A1 | 27-04-2022 |
| | | | US | 2020398787 A1 | 24-12-2020 |
| | | | WO | 2020260222 A1 | 30-12-2020 |
| US 2020132807 | A1 | 30-04-2020 | CN | 112912760 A | 04-06-2021 |
| | | | EP | 3874290 A1 | 08-09-2021 |
| | | | KR | 20210049923 A | 06-05-2021 |
| | | | US | 2020132807 A1 | 30-04-2020 |
| | | | WO | 2020089243 A1 | 07-05-2020 |
| DE 102017214800 | A1 | 28-02-2019 | NONE | | |
| CN 104142491 | A | 12-11-2014 | NONE | | |
| US 2022161759 | A1 | 26-05-2022 | CN | 114615615 A | 10-06-2022 |
| | | | DE | 102021130648 A1 | 25-05-2022 |
| | | | JP | 2022083289 A | 03-06-2022 |
| | | | US | 2022161759 A1 | 26-05-2022 |

EPO FORM P0459

For more details about this annex : see Official Journal of the European Patent Office, No. 12/82